# EUROPÄISCHE PATENTANMELDUNG

(11) **EP 2 230 413 A2**
(43) Veröffentlichungstag der Anmeldung: **22.09.2010**
(21) Anmeldenummer: 10001721.9
(22) Anmeldetag: 19.02.2010
(51) Int. Cl.: F16B 45/02

(54) **Karabinerhaken**

(30) Priorität: 19.03.2009 DE 202009003905 U
(71) Anmelder: SKYLOTEC GmbH, 56567 Neuwied (DE)
(72) Erfinder: Rinklake, Kai, 56567 Neuwied (DE)
(74) Vertreter: Zeitler - Volpert - Kandlbinder

(57) **Zusammenfassung**

Die Erfindung betrifft einen Karabinerhaken mit einem Hakenkörper (2), welcher ein Kopfteil (3) mit einem freien Hakenende (4), ein Basisteil (5) und eine zwischen dem Basisteil (5) und dem freien Hakenende (4) ausgebildete Einführöffnung (6) aufweist, und einem die Einführöffnung (6) wahlweise übergreifenden, am Basisteil (5) schwenkbar gelagerten Verschlussteil (7), dessen freies Ende (11) in Schließstellung mit dem freien Hakenende (4) des Hakenkörpers (2) formschlüssig verbindbar ist, wobei der Hakenkörper (2) und der Verschlussteil (7) aus Stahlblech (8) gefertigt sind und der Hakenkörper (2) zumindest teilweise mit Kunststoff umspritzt ist. Erfindungsgemäß ist auch der Verschlussteil (7) zumindest teilweise mit Kunststoff umspritzt und die Umspritzung (12) derart ausgebildet, dass Elemente der formschlüssigen Verbindung (14) durch die Umspritzung (12) geschützt angeordnet sind.

## Beschreibung

Die Erfindung bezieht sich auf einen Karabinerhaken nach dem Oberbegriff des Schutzanspruchs 1.

Ein solcher Karabinerhaken ist aus der Praxis bekannt. Bei diesem Karabinerhaken ist der Verschlussteil vollständig aus Stahlblech gefertigt. An seiner zum freien Hakenende des Hakenkörpers weisenden Spitze hat der Verschlussteil eine Bohrung, in die ein am freien Hakenende vorgesehener Haken in der Schließstellung des Verschlussteils eingreift. In einer Freigabestellung, in der der Verschlussteil von dem am freien Hakenende angeordneten Haken abgerückt ist und beispielsweise ein Seil durch die Einführöffnung des Karabinerhakens in letzteren eingeführt werden kann, steht der Haken frei am Hakenende des Hakenkörpers ab. Nachteilig ist dabei, dass sich das Seil beim Ein- bzw. Aushängen an dem Haken verfangen oder an diesem sogar beschädigt werden kann.

Aus der Praxis ist ferner ein System bekannt, bei dem Hakenkörper und Verschlussteil formschlüssig geschmiedet sind. Dies setzt jedoch eine massive Bauweise von Hakenkörper und Verschlussteil beispielsweise aus Stahl oder Aluminium voraus.

Der Erfindung liegt die Aufgabe zugrunde, einen Karabinerhaken der eingangs erwähnten Art zu schaffen, welcher einfach herzustellen und sicher handhabbar ist.

Diese Aufgabe wird erfindungsgemäß durch einen Karabinerhaken mit den Merkmalen des Schutzanspruchs 1 gelöst.

Vorteilhafte Weiterbildungen sind Gegenstand der Unteransprüche.

Erfindungsgemäß ist auch der Verschlussteil zumindest teilweise mit Kunststoff umspritzt und ist die Umspritzung generell derart ausgebildet, dass Elemente der formschlüssigen Verbindung durch die Umspritzung geschützt angeordnet sind. Dadurch lässt sich der Karabinerhaken auf der einen Seite preisgünstig herstellen, auf der anderen Seite sind die wesentlichen Elemente des Karabinerhakens, nämlich Hakenkörper und Verschlussteil, durch die Kunststoff-Umspritzung sehr weitgehend gegen harte Stöße, etwa an Felsen, und gegen das Risiko einer Bildung von dadurch bedingten Haarrissen geschützt. Es ist somit möglich, die wesentlichen Elemente des Karabinerhakens aus einfachem Stahlblech zu fertigen, welches keiner weiteren Nachbehandlung, wie zum Beispiel einer Entgratung oder einem Polieren der Oberfläche, zu unterziehen ist. Gleichzeitig verbessert die Umspritzung auch des Verschlussteils den Griff. Durch das zumindest teilweise Umspritzen des Verschlussteils ist beispielsweise ein Seil nicht der Gefahr ausgesetzt, Beschädigungen durch häufiges In-Kontakt-treten mit dem Verschlussteil zu erleiden. Durch die geschützte Anordnung von Elementen der formschlüssigen Verbindung ist der erfindungsgemäße Karabinerhaken sehr sicher handhabbar, da ein Seil oder andere Gegenstände nicht mit einem gegebenenfalls am freien Hakenende vorgesehenen Haken in Berührung kommen können. Dadurch ist die Gefahr einer Beschädigung des Seils weitgehend ausgeschlossen.

Vorteilhafterweise sind Hakenkörper und Verschlussteil aus Stahlblech ausgestanzt, so dass wesentliche Elemente des Karabinerhakens auf einfache Weise und daher kostengünstig hergestellt werden können.

Gemäß einer anderen Weiterbildung der Erfindung hat das freie Hakenende des Hakenkörpers eine innerhalb der Kontur der Umspritzung angeordnete Hakenspitze. Wie zuvor bereits angedeutet, ist die Hakenspitze somit geschützt innerhalb der Umspritzung untergebracht. Dadurch ist ein Kontakt zwischen der Hakenspitze mit einem Seil oder mit Körperteilen des Benutzers nahezu ausgeschlossen. Insofern ist der erfindungsgemäße Karabinerhaken äußerst sicher handhabbar.

Gemäß einer anderen Weiterbildung der Erfindung ist der Verschlussteil ein U-förmig gebogenes Blechteil, wobei das Blechteil vorzugsweise zwei parallele Schenkel aufweist, die über einen U-förmigen Biegeabschnitt einstückig miteinander verbunden sind. Ein solcher Verschlussteil lässt sich einfach und kostengünstig fertigen, benötigt nur wenig Material und weist eine gute Festigkeit auf. Da die Öffnung des U-förmig gebogenen Blechteils dem freien Hakenende des Hakenkörpers zugewandt sein kann, lässt sich ein derart ausgebildeter Verschlussteil leicht am freien Hakenende einhaken, so dass die sich daraus ergebende formschlüssige Verbindung vorteilhaft auf Zug beansprucht werden kann. Ein derart ausgebildeter Verschlussteil benötigt im Gegensatz zu dem aus dem eingangs erwähnten Stand der Technik bekannten Karabinerhaken deutlich weniger Material.

Gemäß einer bevorzugten Weiterbildung der Erfindung ist der U-förmige Biegeabschnitt des Blechteils zum freien Hakenende des Hakenkörpers hin weisend angeordnet, ferner steht der U-förmige Biegeabschnitt frei über die Umspritzung des Verschlussteils vor und ist in der Schließstellung des Verschlussteils lösbar mit dem freien Hakenende des Hakenkörpers verriegelt. Das freie Vorstehen des U-förmigen Biegeabschnitts über die Umspritzung des Verschlussteils ermöglicht in der Schließstellung des Verschlussteils einen einfachen Eingriff des Biegeabschnitts mit dem freien Hakenende des Hakenkörpers. Da der Verschlussteil in seiner Freigabestellung weg von dem freien Hakenende geschwenkt ist, kann ein im Karabinerhaken gehaltenes Seil kaum mit dem U-förmigen Biegeabschnitt in Berührung treten.

Vorteilhafterweise weist der Karabinerhaken ferner eine L-förmige Sicherung auf, welche schwenkbar am Hakenkörper gelagert ist, wobei die Sicherung vorzugsweise einen Sperrriegel hat, welcher ein Überführen des Verschlussteils aus der Schließstellung in eine Freigabestellung nur dann ermöglicht, wenn die Sicherung zusammen mit ihrem Sperrriegel aus einer Verriegelungsstellung in eine Entriegelungsstellung überführt ist. Durch das Vorsehen der vorgenannten Sicherung ist die sichere Handhabbarkeit des erfindungsgemäßen Karabinerhakens weiter verbessert. Ein unbeabsichtigtes Öffnen des Karabinerhakens ist wirksam verhindert. Ein Überführen des Verschlussteils in die Freigabestellung ist leicht dann ermöglicht, wenn die Sicherung in ihre Entriegelungsstellung beaufschlagt ist.

Gemäß einer Weiterbildung der Erfindung weist die Sicherung einen den Sperrriegel zumindest teilweise umgreifenden Betätigungshebel auf. Durch einfaches Drücken des Betätigungshebels kann die Sicherung in ihre Entriegelungsstellung und der Verschlussteil in seine Freigabestellung überführt werden.

Vorteilhafterweise ist die Sicherung aus mit Kunststoff zumindest teilweise umspritztem Stahlblech hergestellt, wobei vorzugsweise der Sperrriegel aus Stahlblech und der Betätigungshebel aus Kunststoff gefertigt sind. Damit können wesentliche Elemente des erfindungsgemäßen Karabinerhakens, wie Hakenkörper, Verschlussteil und Sicherung, aus umspritztem Stahlblech gefertigt sein. Ein solcher Karabinerhaken ist damit, wie zuvor bereits angedeutet, einfach herzustellen und sehr sicher handhabbar.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Vorderansicht eines Karabinerhakens in Schließstellung seines Verschlussteils sowie Verriegelungsstellung einer Sicherung;
- Fig. 2: eine schematische Vorderansicht des Karabinerhakens gemäß Fig. 1 mit der Sicherung in der Entriegelungsstellung;
- Fig. 3: eine schematische Vorderansicht des Karabinerhakens gemäß Fig. 2 mit dem Verschlussteil in der Freigabestellung;
- Fig. 4: eine schematische, perspektivische, auseinandergezogene Ansicht des Karabinerhakens; und
- Fig. 5: eine schematische, perspektivische Teilansicht des Karabinerhakens gemäß Fig. 1 in vergrößertem Maßstab.

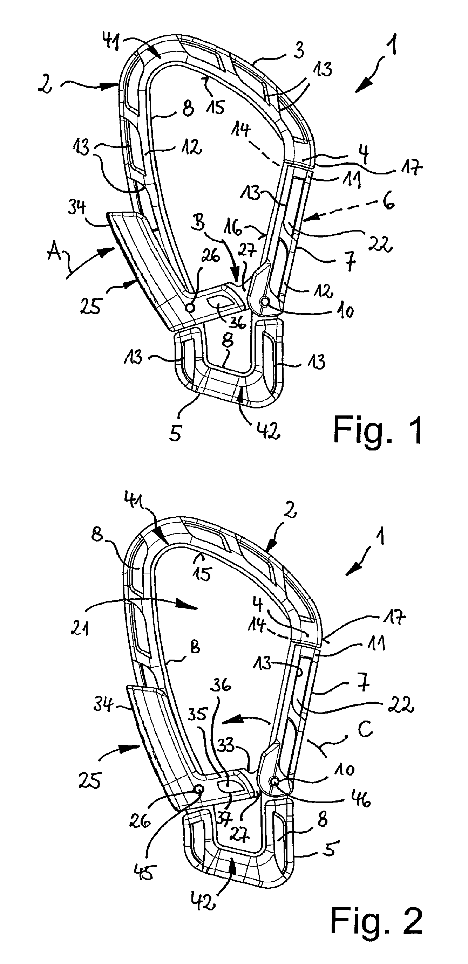

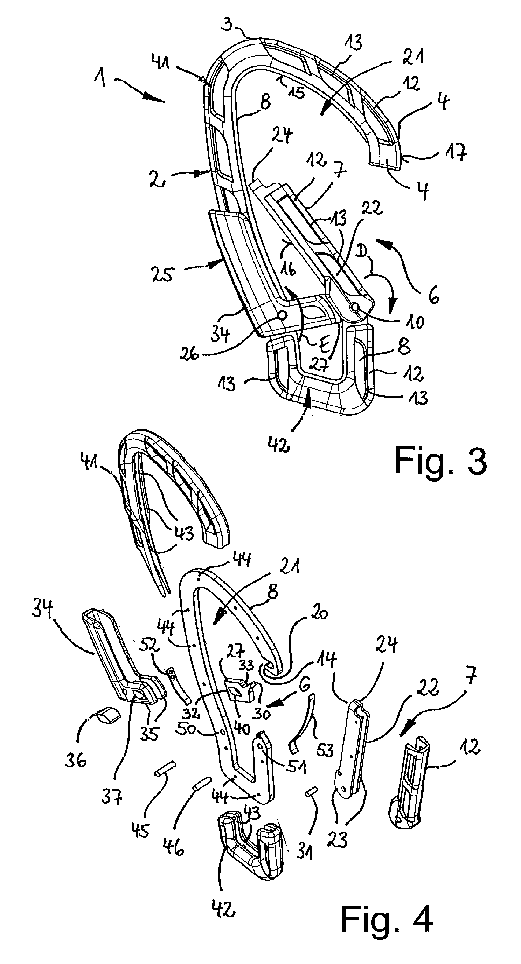

In Fig. 1 ist eine schematische Vorderansicht eines Karabinerhakens 1 dargestellt. Der Karabinerhaken 1 hat einen Hakenkörper 2, welcher ein Kopfteil 3 mit einem freien Hakenende 4, ein Basisteil 5 und eine zwischen dem Basisteil 5 und dem freien Hakenende 4 ausgebildete Einführöffnung 6 aufweist. Letztere ist genauer in den Fig. 3 und 4 dargestellt.

Ferner hat der Hakenkörper ein Verschlussteil 7, das die Einführöffnung 6 wahlweise übergreift, diese Stellung ist in den Fig. 1, 2 und 5 gezeigt, und am Basisteil 5 schwenkbar gelagert ist. Das eine Ende des Verschlussteils 7 nimmt die Schwenkachse 10 auf; das gegenüber liegende andere Ende, nachfolgend freies Ende 11 des Verschlussteils 7 genannt, ist in der in den Fig. 1, 2 und 5 gezeigten Schließstellung des Verschlussteils 7 mit dem freien Hakenende des Hakenkörpers 2 formschlüssig verbindbar.

Hakenkörper 2 und Verschlussteil 7 sind aus Stahlblech 8 gefertigt. Der Hakenkörper 2 ist zumindest teilweise mit Kunststoff umspritzt, so dass der Hakenkörper umfangsseitig größtenteils von einer Umspritzung 12 umgeben ist. Gemäß einer bevorzugten Ausführungsform der Erfindung weist die Umspritzung Durchbrechungen 13 auf, durch die das Stahlblech 8, wie in den Fig. 1 bis 3 angedeutet, sichtbar ist.

Erfindungsgemäß ist auch der Verschlussteil 7 zumindest teilweise mit Kunststoff umspritzt. Die Durchbrechungen 13 der Umspritzung 12 sind auch im Bereich des Verschlussteils 7 vorgesehen. Die Umspritzung 12 ist derart ausgebildet, dass Elemente der formschlüssigen Verbindung 14 durch die Umspritzung 12 geschützt angeordnet sind.

Hakenkörper 2 und Verschlussteil 7 sind gemäß einer Ausführungsform der Erfindung aus dem Stahlblech 8 ausgestanzt. Die Innenkante 15 des den Hakenkörper 2 bildenden Stahlblechs 8 und die Innenkante 16 des den Verschlussteil 7 bildenden Stahlblechs liegen frei und sind daher nicht von der Umspritzung 12 umgeben.

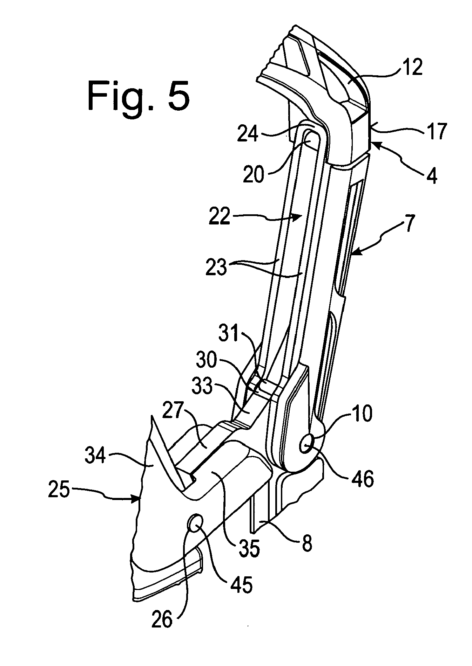

Wie in den Fig. 3 und 5 näher angedeutet, hat das freie Hakenende 4 des Hakenkörpers 2 eine innerhalb der Kontur 17 der Umspritzung 12 angeordnete Hakenspitze 20. Diese ist nach innen, d.h. zur inneren Ausnehmung 21 des Karabinerhakens 1 hin gerichtet.

Gemäß einer besonders bevorzugten Ausführungsform der Erfindung ist der Verschlussteil 7 ein U-förmig gebogenes Blechteil 22. Dieses Blechteil hat zwei parallele Schenkel 23, die über einen U-förmigen Biegeabschnitt 24 einstückig miteinander verbunden sind. Diese Einzelheiten sind genauer in den Fig. 4 und 5 gezeigt. Der U-förmige Biegeabschnitt 24 des Blechteils 22 bildet das freie Ende 11 des Verschlussteils 7 und ist zum freien Hakenende 4 des Hakenkörpers 2 hinweisend angeordnet. Gemäß Fig. 3 steht der Biegeabschnitt 24 frei über die Umspritzung 12 des Verschlussteils 7 vor. In der Schließstellung des Verschlussteils ist der Biegeabschnitt 24 lösbar mit dem freien Hakenende 4 des Hakenkörpers 2 verriegelt, wie dies in den Fig. 1, 2 und 5 angedeutet ist.

Gemäß einer besonders bevorzugten Ausführungsform der Erfindung hat der Karabinerhaken 1 ferner eine L-förmige Sicherung 25, welche um eine Schwenkachse 26 schwenkbar am Hakenkörper 2 gelagert ist. Die Sicherung 25 hat einen Sperrriegel 27. Dieser ist genauer in den Fig. 4 und 5 dargestellt und ermöglicht ein Überführen des Verschlussteils 7 aus der in den Fig. 1, 2 und 5 dargestellten Schließstellung in eine in Fig. 3 gezeigte Freigabestellung nur dann, wenn die Sicherung 25 zusammen mit ihrem Sperrriegel 27 aus einer in Fig. 5 gezeigten Verriegelungsstellung in eine Entriegelungsstellung überführt ist.

Der Sperrriegel 27 hat an seiner zum Verschlussteil 7 weisenden Seitenfläche eine Nase 30, welche in der Verriegelungsstellung des Sperrriegels 27 an einem Bolzen 31 des Verschlussteils 7 anliegt. An die Nase 30 schließt sich zur gegenüber liegenden anderen Seitenfläche 32 des Sperrriegels 27 hin eine V- bzw. L-förmig ausgestaltete Auflauffläche 33 an. An dieser Auflauffläche 33 kann der Bolzen 31 des Verschlussteils 7 entlang gleiten, wenn die Sicherung 25 aus ihrer in Fig. 1 gezeigten Verriegelungsstellung in ihre in den Fig. 2 und 3 gezeigte Entriegelungsstellung überführt ist.

Dazu wird die Sicherung 25 in Richtung des Pfeils A in Fig. 1 im Uhrzeigersinn um ihre Schwenkachse 26 so weit verschwenkt, bis die Sicherung die in Fig. 2 gezeigte Entriegelungsstellung annimmt. Durch ein Verschwenken der Sicherung 25 in Richtung des Pfeils A wird der Sperrriegel 27 in Richtung des Pfeils B, also nach unten hin, bewegt, wodurch die Nase 30 des Sperrriegels 27 außer Anlage mit dem Bolzen 31 des Verschlussteils 7 gelangt. Dadurch kann sich der Verschlussteil 7 in Fig. 2 in Richtung des Pfeils C nach innen, d.h. zur inneren Ausnehmung 21 des Karabinerhakens 1 hin, bewegen, so dass der Karabinerhaken letztlich die in Fig. 3 gezeigte Stellung annimmt. In dieser befindet sich die Sicherung also in ihrer Entriegelungsstellung und der Verschlussteil in seiner Freigabestellung.

Die Sicherung 25 hat ferner einen den Sperrriegel 27 zumindest teilweise umgreifenden Betätigungshebel 34. Der Sperrriegel 27 ist zwischen Schenkeln 35 des Betätigungshebels 34 mittels eines Einsteckstückes 36 (siehe Fig. 4) fest gehalten. Das Einsteckstück 36 durchdringt eine Ausnehmung 37 in den Schenkeln 35 sowie eine Ausnehmung 40, welche im Sperrriegel 27 ausgebildet ist.

Die Sicherung 25 ist aus mit Kunststoff zumindest teilweise umspritztem Stahlblech hergestellt, wobei vorzugsweise der Sperrriegel 27 aus Stahlblech und der Betätigungshebel 34 aus Kunststoff gefertigt sind.

Gemäß Fig. 4 hat die Umspritzung 12 des Hakenkörpers 2 einen oberen Abschnitt 41 und einen unteren Abschnitt 42, welche fest mit dem Stahlblech 8 des Hakenkörpers verbunden sind. Dazu können an den Abschnitten 41 und 42 Steckbolzen 43 angeformt sein, welche in Bohrungen 44 des Stahlblechs 8 eingesteckt sind. Dadurch sind die Abschnitte 41, 42 der Umspritzung 12 fest an dem Stahlblech 8 des Hakenkörpers 2 gehalten.

Auf ähnliche Weise ist die Umspritzung 12 des Verschlussteils 7 mit dessen Blechteil 22 verbunden. Sicherung 25 und Verschlussteil 7 sind mittels Bolzen 45, 46 schwenkbar gelagert, welche in Fig. 4 gezeigt sind. Es ist klar, dass die Bolzen 45, 46 in Bohrungen 50, 51 eingesteckt sind, welche im Hakenkörper 2, genauer in dessen Stahlblech 8, ausgebildet sind. Wie in Fig. 4 gezeigt, sind ferner streifenförmige Federn 52, 53 vorgesehen, mit deren Hilfe die Sicherung 25 in ihre in Fig. 1 gezeigte Verriegelungsstellung und der Verschlussteil 7 in dessen Freigabestellung (siehe Fig. 3) vorbelastet sind.

Nachfolgend wird die Handhabung des erfindungsgemäßen Karabinerhaken näher erläutert.

In der in Fig. 3 gezeigten Freigabestellung des Verschlussteils kann ein nicht näher gezeigtes Seil durch die Einführöffnung 6 in die innere Ausnehmung 21 des Karabinerhakens 1 eingeführt werden. Anschließend wird der Verschlussteil 7 gegen den Druck seiner Feder 53 in Fig. 3 in Richtung des Pfeils D so weit verschwenkt, bis der U-förmige Biegeabschnitt 24 des Verschlussteils die Hakenspitze 20 am freien Hakenende 4 des Hakenkörpers 2 hintergreift, wobei bei dieser Schwenkbewegung entlang des Pfeils D der Bolzen 31 des Verschlussteils 7 entlang der Auflauffläche 33 des Sperrriegels 27 nach außen bis hinter Nase 30 entlang gleitet, wobei die Sicherung 25 in der Schließstellung des Verschlussteils durch die Kraft ihrer Feder 52 automatisch in Richtung des Pfeils E in ihre Verriegelungsstellung überführt wird. Diese Verriegelungsstellung ist in den Fig. 1 und 5 gezeigt.

Zum Überführen des Verschlussteils 7 aus dessen in den Fig. 1 und 5 gezeigten Schließstellung in die in Fig. 3 gezeigte Freigabestellung ist der Betätigungshebel 34 der Sicherung in Fig. 1 durch Druck in Richtung des Pfeils A in die in Fig. 2 gezeigte Entriegelungsstellung zu überführen, in der die Nase 30 des Sperrriegels 27 der Sicherung 25 den Bolzen 31 des Verriegelungsteils 7 freigibt, so dass der Verriegelungsteil aufgrund der Vorbelastung durch seine Feder 53 automatisch in Fig. 2 in Richtung des Pfeils C in die in Fig. 3 gezeigte Freigabestellung überführt wird. In der letztgenannten Stellung kann das Seil in den Karabinerhaken eingeführt bzw. aus diesem durch die Einführöffnung 6 herausgeführt werden. Zum Verschließen des Karabinerhakens wird der Verschlussteil 7 in der Fig. 3 in Richtung des Pfeils D verschwenkt, bis der U-förmige Biegeabschnitt 24 die Hakenspitze 20 des freien Hakenendes 4 des Hakenkörpers hintergreift und die Nase 30 des Sperrriegels 27 wieder in Anlage an den Bolzen 31 des Verriegelungsteils durch ein Verschwenken der Sicherung 25 in Richtung des Pfeils E in Fig. 3 letztlich in die in Fig. 1 gezeigte Verriegelungsstellung gelangt.

Damit ist ein Karabinerhaken geschaffen, welcher einfach und preiswert herzustellen und sehr sicher und komfortabel handhabbar ist.

## Patentansprüche

1. Karabinerhaken
mit einem Hakenkörper (2), welcher ein Kopfteil (3) mit einem freien Hakenende (4), ein Basisteil (5) und eine zwischen dem Basisteil (5) und dem freien Hakenende (4) ausgebildete Einführöffnung (6) aufweist, und
einem die Einführöffnung (6) wahlweise übergreifenden, am Basisteil (5) schwenkbar gelagerten Verschlussteil (7), dessen freies Ende (11) in Schließstellung mit dem freien Hakenende (4) des Hakenkörpers (2) formschlüssig verbindbar ist,
wobei der Hakenkörper (2) und der Verschlussteil (7) aus Stahlblech (8) gefertigt sind und der Hakenkörper (2) zumindest teilweise mit Kunststoff umspritzt ist,
**dadurch gekennzeichnet, dass**
auch der Verschlussteil (7) zumindest teilweise mit Kunststoff umspritzt ist und
die Umspritzung (12) derart ausgebildet ist, dass Elemente der formschlüssigen Verbindung (14) durch die Umspritzung (12) geschützt angeordnet sind.

2. Karabinerhaken nach Anspruch 1, **dadurch gekennzeichnet, dass** Hakenkörper (2) und Verschlussteil (7) aus Stahlblech (8) ausgestanzt sind.

3. Karabinerhaken nach Anspruch 1 oder 2, **dadurch gekennzeichnet, dass** das freie Hakenende (4) des Hakenkörpers (2) eine innerhalb der Kontur (17) der Umspritzung (12) angeordnete Hakenspitze (20) hat.

4. Karabinerhaken nach einem der Ansprüche 1 bis 3, **dadurch gekennzeichnet, dass** der Verschlussteil (7) ein U-förmig gebogenes Blechteil (22) ist.

5. Karabinerhaken nach Anspruch 4, **dadurch gekennzeichnet, dass** das Blechteil (22) zwei parallele Schenkel (23) aufweist, die über einen U-förmigen Biegeabschnitt (24) einstückig miteinander verbunden sind.

6. Karabinerhaken nach Anspruch 5, **dadurch gekennzeichnet, dass** der U-förmige Biegeabschnitt (24) des Blechteils (22) zum freien Hakenende (4) des Hakenkörpers (2) hin weisend angeordnet ist, frei über die Umspritzung (12) des Verschlussteils (7) vorsteht und in der Schließstellung des Verschlussteils (7) lösbar mit dem freien Hakenende (4) des Hakenkörpers (2) verriegelt ist.

7. Karabinerhaken nach einem der vorhergehenden Ansprüche, **gekennzeichnet durch** eine L-förmige Sicherung (25), welche schwenkbar am Hakenkörper (2) gelagert ist.

8. Karabinerhaken nach Anspruch 7, **dadurch gekennzeichnet, dass** die Sicherung (25) einen Sperrriegel (27) aufweist, welcher ein Überführen des Verschlussteils (7) aus der Schließstellung in eine Freigabestellung nur dann ermöglicht, wenn die Sicherung (25) zusammen mit ihrem Sperrriegel (27) aus einer Verriegelungsstellung in eine Entriegelungsstellung überführt ist.

9. Karabinerhaken nach Anspruch 8, **dadurch gekennzeichnet, dass** die Sicherung (25) einen den Sperrriegel (27) zumindest teilweise umgreifenden Betätigungshebel (34) aufweist.

10. Karabinerhaken nach Anspruch 9, **dadurch gekennzeichnet, dass** die Sicherung (25) aus mit Kunststoff zumindest teilweise umspritztem Stahlblech hergestellt ist, wobei vorzugsweise der Sperrriegel (27) aus Stahlblech und der Betätigungshebel (34) aus Kunststoff gefertigt sind.
